(19) Europäisches Patentamt
European Patent Office
Office européen des brevets

(11) **EP 1 901 313 A1**

(12) **EUROPEAN PATENT APPLICATION**
published in accordance with Art. 153(4) EPC

(43) Date of publication:
**19.03.2008 Bulletin 2008/12**

(51) Int Cl.:
*H01B 13/00* (2006.01)    *C08F 251/00* (2006.01)
*H01B 1/06* (2006.01)     *H01M 8/02* (2006.01)
*H01M 8/10* (2006.01)

(21) Application number: **06757033.3**

(22) Date of filing: **06.06.2006**

(86) International application number:
**PCT/JP2006/311293**

(87) International publication number:
**WO 2006/134801 (21.12.2006 Gazette 2006/51)**

(84) Designated Contracting States:
**DE FI FR GB**

(30) Priority: **13.06.2005 JP 2005172772**

(71) Applicant: **Shin-Etsu Chemical Company, Ltd.**
**Tokyo 100-0004 (JP)**

(72) Inventors:
• **KAWADA, Nobuo,**
**c/o Shin-Etsu Chem. Co. Ltd.**
**Annaki-shi,**
**Gunma 379-0195 (JP)**

• **OHBA, Toshio,**
**c/o Shin-Etsu Chem. Co., Ltd.**
**Annaka-shi,**
**Gunma 379-0195 (JP)**
• **TAKAHASHI, Norifumi,**
**c/o Shin-Etsu Chem. Co., Ltd.**
**Annaka-shi,**
**Gunma 379-0195 (JP)**

(74) Representative: **Stoner, Gerard Patrick et al**
**Mewburn Ellis LLP**
**York House**
**23 Kingsway**
**London WC2B 6HP (GB)**

(54) **SOLID POLYELECTROLYTE MEMBRANE, PROCESS FOR PRODUCTION THEREOF, AND FUEL CELLS**

(57)    In the present invention, a solid polyelectrolyte film is obtained by irradiating a dense fluorinated resin film having a thickness of 10 to 50 μm in an inert gas atmosphere with an electron beam having been accelerated at an accelerating voltage of 60 to 300 kV in vacuum and transmitted through an electron beam-transmitting window so that an absorbed dose is from 1 to 50 kGy, followed by graft-polymerizing a polymerizable monomer. Moreover, the solid polyelectrolyte film is disposed between a fuel electrode and an air electrode to form a fuel cell.

EP 1 901 313 A1

## Description

### TECHNICAL FIELD

The present invention relates to a solid polyelectrolyte film and a process for producing the same, and a fuel cell.

### BACKGROUND ART

Since a fuel cell using a solid polyelectrolyte film exhibits a low working temperature of 100°C or lower and a high energy density, it has been expected to put it into practical use in power sources for electric vehicles, simplified auxiliary power sources for electric/electronic devices, domestic fixed power sources, and the like. In the solid polyelectrolyte film-type fuel cell, there are included important elemental technologies on a solid polyelectrolyte film, a platinum-based catalyst, a gas-diffusion electrode, a conjugate of the solid polyelectrolyte film with the gas diffusion electrode, and the like. Of these, it is one of the most important technologies to develop a solid polyelectrolyte film having good properties as a fuel cell.

In the solid polyelectrolyte film-type fuel cell, a gas diffusion electrode is combined with both faces of a solid polyelectrolyte film and the solid polyelectrolyte film and the gas diffusion electrode substantially form an integrated structure. Therefore, the solid polyelectrolyte film acts as an electrolyte for conducting protons and also plays a role as a diaphragm for preventing direct mixing of hydrogen or methanol as a fuel with an oxidizing agent even under elevated pressure. As such a solid polyelectrolyte film, it is required to have a large conductivity of protons and a high ion-exchange capacity as an electrolyte, to exhibit excellent chemical stability, particularly oxidation resistance against hydroxyl radicals, and to have a constant and high water retentivity for maintaining a low electrical resistance. On the other hand, in view of the role as a diaphragm, it is also required to have a large mechanical strength, an excellent dimensional stability, no excessive permeability toward hydrogen gas or methanol as a fuel and oxygen gas as an oxidizing agent, and the like.

In an early solid polyelectrolyte film-type fuel cell, an ion-exchange film of a hydrocarbon resin produced by the copolymerization of styrene with divinylbenzene was used as an electrolyte film. However, this type of electrolyte film is very low in durability and hence poor in practicality. Thereafter, a fluorinated resin-based perfluorosulfonic acid film "Nafion (registered trademark of Du Pont)" developed by Du Pont has been commonly used.

However, although conventional fluorinated resin-based electrolyte films such as "Nafion" are excellent in chemical durability and stability, they have a problem of occurrence of a crossover phenomenon that methanol passes through the electrolyte films in a direct methanol-type fuel cell (DMFC) in which methanol is used as a fuel, resulting in a decreased output.

Furthermore, since the fluorinated resin-based electrolyte films are produced through many production steps, there is a problem that production thereof requires high costs, which is a large obstacle for their practical use.

Therefore, it has been attempted to develop a low cost electrolyte film which may be substituted for the above "Nafion" or the like, and there have been proposed processes for producing a solid polyelectrolyte film by introducing a sulfonic acid group into a fluorinated resin-based film by radiation graft polymerization (e.g., see, Patent Documents 1 to 10). According to the radiation graft polymerization process, a solid polyelectrolyte film having a strong film strength after graft polymerization and an excellent oxidation resistance can be obtained by imparting a crosslinked structure to the fluorinated resin film.
Patent Document 1 : JP-A-7-50170
Patent Document 2 : JP-A-8-503574
Patent Document-3 : JP-A-9-102322
Patent Document 4 : JP-A-2000-11756
Patent Document 5 : JP-A-2000-331693
Patent Document 6 : JP-A-2001-216837
Patent Document 7 : JP-A-2001-348439
Patent Document 8 : JP-T-2001-522914
Patent Document 9 : JP-A-2002-313364
Patent Document 10 : JP-A-2004-59752

### DISCLOSURE OF THE INVENTION

Problems that the Invention Is to Solve

However, in the radiation graft process, although a radiation is applied in order to impart reaction active sites to a base material, there is a problem that the base material is deteriorated by the radiation. Moreover, since a radiation harmful to the human body is utilized, it is necessary to provide a strict shielding facility, which is a factor of increasing costs. In the conventional radiation graft processes, since a quantitative investigation is not performed on the radiation deterioration of the base material and the utilization ratio of the radiation (a ratio of energy absorbed in the resin film to irradiated energy), a radiation dose is not optimized and hence the radiation deterioration of the base material and a high cost situation induced by a larger sized shielding facility are invited. Thus, an object of the invention is to provide a high-performance and low-cost solid polyelectrolyte film by optimizing irradiation conditions of a radiation.

Means for Solving the Problems

As a result of extensive studies on the irradiation conditions of a radiation, the present inventors have found that inhibition of the radiation deterioration can be minimized by regulating an absorbed dose and also a utilization ratio of the radiation can be remarkably increased by regulating the kind and energy of the radiation so as to be suitable for a thin film.

Namely, the invention relates to a solid polyelectrolyte film and a process for producing the same, and a fuel cell to be shown below.

(1) A process for producing a solid polyelectrolyte film by graft-polymerizing a polymerizable monomer onto a resin film which has been irradiated with a radiation, said process comprising irradiating a dense fluorinated resin film having a thickness of 10 to 50 $\mu$m in an inert gas atmosphere with an electron beam having been accelerated at an accelerating voltage of 60 to 300 kV in vacuum and transmitted through an electron beam-transmitting window so that an absorbed dose in the resin film is from 1 to 50 kGy, followed by graft-polymerizing the polymerizable monomer.

(2) The process for producing a solid polyelectrolyte film according to (1), wherein the electron beam-transmitting window is a Ti foil having a thickness of 5 to 30 $\mu$m and an irradiation distance is 30 cm or less.

(3) The process for producing a solid polyelectrolyte film according to (2), wherein the accelerating voltage is from 70 to 150 kV, the thickness of the electron beam-transmitting window is from 8 to 15 $\mu$m, and the irradiation distance is 3 cm or less.

(4) The process for producing a solid polyelectrolyte film according to any one of (1) to (3), wherein an absorbed dose rate of the resin film in said irradiation is 1 kGy/sec or more.

(5) The process for producing a solid polyelectrolyte film according to any one of (1) to (4); wherein an oxygen concentration in said irradiation atmosphere is 1,000 ppm or less.

(6) The process for producing a solid polyelectrolyte film according to any one of (1) to (5), wherein a temperature of said irradiation atmosphere is from 10 to 50°C.

(7) A solid polyelectrolyte film, which is obtainable by the process according to any one of (1) to (6).

(8) A fuel cell, which comprises the solid polyelectrolyte film according to (7) disposed between a fuel electrode and an air electrode.

(9) The fuel cell according to (8), which is of a direct methanol-type in which methanol is used as a fuel.

Advantages of the Invention

According to the invention, by irradiating a resin film with an electron beam under specific conditions, an excellent grafting of the resin film is achieved as well as the radiation deterioration is minimized, and further a utilization ratio of the electron beam becomes high even when the resin film is a thin film and thus apparatus costs and running costs can be reduced, so that a high-performance and low-cost solid polyelectrolyte film can be provided.

**BEST MODE FOR CARRYING OUT THE INVENTION**

The following will describe the invention in detail.

In the invention, the resin film is preferably a dense fluorinated resin film having substantially no voids in terms of the excellent fuel-shielding properties thereof, and one hitherto used as a solid polyelectrolyte film can be suitably selected and used. The kind of the fluorinated resin is not particularly limited but preferred are polytetrafluoroethylene, tetrafluoroethylene-perfluoroalkyl vinyl ether copolymers, tetrafluoroethylene-hexafluoropropylene copolymers, and ethylene-tetrafluoroethylene copolymers, particularly preferred are tetrafluoroethylene-perfluoroalkyl vinyl ether copolymers, tetrafluoroethylene-hexafluoropropylene copolymers, and ethylene-tetrafluoroethylene copolymers, and further, more preferred are ethylene-tetrafluoroethylene copolymers since they have excellent physical properties and are suitable for a radiation graft polymerization process. These resins may be also used as a suitable combination thereof.

However, the thickness of the resin film is to be set from 10 $\mu$m to 50 $\mu$m. When the thickness thereof is less than 10 $\mu$m, the film is easy to be broken or fractured owing to insufficient film strength. When the thickness thereof is more than 50 $\mu$m, there is a possibility of insufficient ion conductivity. As a method for producing the resin film having such thickness, extrusion molding is simple and convenient.

The resin film is irradiated with an electron beam so that an absorbed dose is from 1 to 50 kGy, preferably from 1 to 30 kGy. When the absorbed dose is less than 1 kGy, the graft reaction proceeds insufficiently. When the dose is more than 50 kGy, the mechanical properties of the resin film are remarkably lowered by the radiation deterioration. Moreover, the absorbed dose rate is preferably 1 kGy/sec or more. When it is less than 1 kGy/sec, there is a possibility that a cleavage of the molecular chains of the resin film predominantly occurs and thus the resin is deteriorated.

The electron beam is accelerated in vacuum at an accelerating voltage of 60 to 300 kV, preferably 70 to 150 kV. When the accelerating voltage is less than 60 kV or more than 300 kV, the utilization ratio of the electron beam decreases. The electron beam-transmitting window through which the electron beam transmit is preferably a Ti foil in view of corrosion resistance, and the thickness thereof is preferably from 5 to 30 $\mu$m or less, more preferably from 8 to 15 $\mu$m. When the thickness thereof is less than 5 $\mu$m, there arise problems of insufficient strength and pinholes. When it is 30 $\mu$m or more, the utilization ratio of the electron beam decreases. Moreover, the irradiation distance is preferably 30 cm or less, more preferably 3 cm or less. When the distance is more than 30 cm, the electron beam is absorbed in an atmospheric gas and thus the utilization ratio of the electron beam decreases.

The irradiation atmosphere is preferably an atmosphere of an inert gas such as $N_2$, He, or Ar and particularly, oxygen concentration is preferably 1,000 ppm or less. When the oxygen concentration in the irradiation atmosphere is higher than 1,000 ppm, there is a possibility that radicals are deactivated. Moreover, temperature of the irradiation atmosphere is preferably from 10 to 50°C. When the temperature is less than 10°C, cooling costs are required. When it is higher than 50°C, there is a possibility that the radicals disappear.

In this connection, the irradiation with the electron beam may be performed on any of only one face of the resin film, both faces thereof one by one, and both faces simultaneously, but irradiation on both faces is preferred in view of homogeneity. Moreover, for further increasing the utilization ratio, return irradiation may be performed.

By irradiation with the electron beam in the above manner, even in the case where the resin film is a thin film, the utilization ratio of the electron beam is high and damage of the resin film can be minimized, as well as a resin film suitable for grafting is obtained.

Then, grafting of a polymerizable monomer is carried out in accordance with a usual manner. As the polymerizable monomer, monofunctional monomers such as styrene-based monomers including styrene, $\alpha$-methylstyrene, trifluorostyrene, and the like, and polyfunctional monomers such as divinylbenzene and triallyl cyanurate can be used and these monomers are grafted singly or in combination. As a grafting method, for example, the above resin film irradiated with the electron beam may be immersed in a solution containing these polymerizable monomers and the whole may be heated at a temperature of 40 to 80°C for 10 to 20 hours under a nitrogen atmosphere. The solution may be diluted with a solvent such as toluene. In addition, in order to increase a graft ratio, a polymerization initiator such as azoisobutyronitrile is preferably added to the solution and a chain-transfer agent may also be added for controlling the degree of polymerization. In this connection, after the grafting, in order to remove unreacted matter remaining on the surface of the resin film, the resin film is preferably washed with toluene, acetone, or the like, followed by drying.

Then, a sulfonic acid group is introduced into the grafted resin film to thereby obtain the solid polyelectrolyte film of the invention. A method for introducing the sulfonic acid group may include a contact with chlorosulfonic acid or fluorosulfonic acid.

The invention also relates to a fuel cell in which the above-mentioned solid polyelectrolyte film is disposed between a fuel electrode and an air electrode. In the invention, although the constitution and the structure of the fuel cell except the solid polyelectrolyte film is not particularly limited, the constitution is preferably a direct methanol-type fuel cell since the solid polyelectrolyte film has a low methanol permeability.

Examples

The following will describe the invention with reference to Examples but the invention is by no means limited thereto.

Example 1: Deterioration of base material by irradiation with radiation

(1) Irradiation with radiation

Both faces of a dense film of an ethylene-tetrafluoroethylene copolymer (ETFE) (manufactured by Norton) having a thickness of 25 $\mu$m were irradiated with an electron beam at 25°C in a nitrogen atmosphere having an oxygen concentration of about 50 ppm at an accelerating voltage of 100 kV and an irradiation distance of 1.5 cm so that an absorbed dose is 50 kGy using a low-voltage electron beam irradiating apparatus fitted with an electron beam-transmitting window composed of a Ti foil having a thickness of 10 $\mu$m (Light Beam L, manufactured by Iwasaki Electric Co., Ltd.). Moreover, for comparison, irradiation with the electron beam was performed in the same conditions except that the absorbed dose was changed to 100 kGy and 500 kGy.

(2) Evaluation on radiation deterioration

The unirradiated sample and the irradiated sample were cut into a dumbbell shape having a neck width of 6 mm and subjected to a tensile test on an Autograph AGS-500G, manufactured by Shimadzu Corporation. The measured results of breaking energy per volume (= stress at break x elongation at break) as a measure of deterioration are shown in Table 1. From the results, it can be seen that the breaking energy per volume is not so decreased, e.g., 80% or more of that of the unirradiated one at the absorbed dose of 50 kGy but it is lowered to 60% or less of that of the unirradiated one at the absorbed dose of 100 kGy or more and thus the sample is remarkably deteriorated.

Example 2: Utilization ratio of radiation applied

Simulation with calculation was performed by particle transportation calculating code EGS according to Monte Carlo method on the case where a dense ETFE film (density 1.76 g/cm$^3$) having a thickness of 25 $\mu$m was irradiated in a nitrogen atmosphere at an irradiation distance of 0.5 to 30 cm with electrons accelerated at a voltage of 60 kV to 300 kV in vacuum after the electrons were transmitted through a Ti foil having a thickness of 8 to 30 $\mu$m. Moreover, for comparison, the simulation with calculation was performed on the cases of (a) irradiation in the same conditions except that the acceleration voltage was changed to 50 kV or 500 to 3,000 kGy, (b) irradiation in the same conditions except that the thickness of the Ti foil was changed to 50 $\mu$m and/or the irradiation distance was changed to 50 cm, and (c) irradiation with y ray from $^{60}$Co transmitted through an iron plate of 1 mm at an irradiation distance of 20 cm in a nitrogen atmosphere. The results are shown in Table 2. From the results, it can be seen that a high utilization ratio of 5% or more is obtained in the case where the acceleration voltage is from 60 kV to 300 kV and the irradiation distance is 30 cm or less.

Example 3: Styrene-divinylbenzene co-grafted electrolyte film

(1) Co-graft polymerization of styrene (St)-divinylbenzene (DVB)

Both faces of a dense ETFE film (manufactured by Norton) having a length of 5 cm, a width of 6 cm, and a thickness of 25 $\mu$m were irradiated with an electron beam at 25°C in a nitrogen atmosphere having an oxygen concentration of about 50 ppm under an accelerating voltage of 100 kV, an irradiation distance of 15 cm, an absorbed dose rate of 4 to 21 kGy/sec, and an absorbed dose of 1 kGy to 10 kGy using a low-voltage electron beam irradiating apparatus fitted with an electron beam-transmitting window composed of a Ti foil having a thickness of 10 $\mu$m (Light Beam L, manufactured by Iwasaki Electric Co., Ltd).

Moreover, 19 mg of AIBN was dissolved in 19.2 g of toluene to prepare a 0.1% by mass initiator solution. Then, two sheets of the ETFE film irradiated with the electron beam, 11.4 g of St, 0.57 g of 55% DVB, 2.99 g of the initiator solution, and 8.99 g of toluene were placed in a 25 ml test tube fitted with a three-way stopcock and the whole was bubbled with nitrogen at room temperature for 0.5 hour. Thereafter, the three-way stopcock was closed and the graft-polymerization was carried out in an oil bath at 63°C for 16 hours. After gels attached to the film were physically removed, the film was washed with xylene and dried under reduced pressure at 100°C for 2 hours to obtain an St-DVB co-grafted film. When a graft ratio was determined from the change in film weight before and after the graft polymerization according to the following expression, the ratio was found to be from 26% to 92% for the absorbed dose of electron beam of 1 kGy to 10 kGy.

$$\text{Graft ratio} = (\text{Film weight after graft polymerization} - \text{Film weight before graft}$$

$$\text{polymerization})/\text{Film weight before graft polymerization} \times 100\ (\%)$$

(2) Sulfonation of St-DVB co-grafted film

A chlorosulfonic acid/dichloroethane solution was prepared by mixing 7.5 ml of chlorosulfonic acid and 17.5 ml of dichloromethane. In a 25 ml test tube fitted with a Dimroth condenser were placed two sheets of the St-DVB co-grafted film and the above solution, followed by sulfonation in an oil bath at 50°C for 2 hours. The resulting film was washed with dichloroethane and pure water and dried under reduced pressure at 100°C for 2 hours. When a sulfonation ratio was determined from change in film weight before and after the sulfonation according to the following expression, the ratio was found to be from 96 to 100% in all cases.

$$\text{Sulfonation rate} = \{(\text{Film weight after sulfonation - Film weight before}$$

$$\text{sulfonation})/98.5\}/\{(\text{Film weight after graft polymerization - Film weight before graft}$$

$$\text{polymerization})/104.1\} \times 100\ (\%)$$

Then, two sheet of the sulfonated St-DVB co-grafted film and a 10 w/v% KOH aqueous solution were placed in a 25 ml test tube and hydrolyzed in an oil bath at 100°C for 2 hours to obtain K-form electrolyte film. The K-form electrolyte film was washed with pure water and dried under reduced pressure at 100°C for 2 hours. Finally, two sheets of the K-form electrolyte film and 2M hydrochloric acid were placed in a 25 ml test tube and ion-exchange was performed in an oil bath at 100°C for 2 hours. Thereafter, the film was washed with pure water and dried under reduced pressure at 100°C for 2 hours to obtain H-form electrolyte film.

(3) Property evaluations

The following measurements were performed on the representative electrolyte films obtained above. The results are shown in Table 3.

(i) Ion-exchange capacity

As a conventional method, it was determined from the difference between the weight of the K-form electrolyte film and the weight of the H-form electrolyte film.

$$\text{Ion-exchange capacity} = (\text{Weight of K-form electrolyte film - Weight of H-form}$$

$$\text{electrolyte film})/(\text{Atomic weight of K - Atomic weight of H})/\text{Weight of H-form}$$

$$\text{electrolyte film}$$

(ii) Degree of swelling with water

A film was immersed in pure water at 60°C and the degree was determined from the difference between the weight of hydrated film and the weight of dried film after drying under reduced pressure at 100°C.

$$\text{Degree of swelling with water} = (\text{Weight of wet film - Weight of dried}$$

$$\text{film})/\text{Weight of dried film}$$

(iii) Methanol permeability

A 10M methanol-water and pure water were separated with an electrolyte film and an amount of methanol permeated through the electrolyte film from the methanol-water side to the pure water side was quantitatively determined by gas-chromatography.

(iv) Ion conductivity

Using an impedance analyzer (1260 manufactured by Solartron), the conductivity was determined by measuring resistance of a strip-shape sample (width 1 cm) in a longitudinal direction at room temperature by a 4-terminal alternative current impedance method.

Table 1

|  | Absorbed dose (kGy) | Breaking energy per volume (MJ/m$^3$) | Ratio to unirradiated one (%) |
|---|---|---|---|
| Unirradiated one | 0 | 128 | 100 |
| Example 1 | 50 | 103 | 80 |
| Comparative Example 1 | 100 | 77 | 60 |
|  | 500 | 34 | 26 |

Table 2

|  | Acceleration voltage (kV) | Thickness of Ti foil (μm) | Irradiation Distance (cm) | Utilization ratio of radiation (%) |
|---|---|---|---|---|
| Example 2 | 60 | 8 | 0.5 | 9.9 |
|  | 70 | 8 | 0.5 | 23.7 |
|  | 100 | 8 | 0.5 | 35.7 |
|  | 150 | 8 | 0.5 | 20.5 |
|  | 200 | 8 | 0.5 | 11.8 |
|  | 250 | 8 | 0.5 | 7.2 |
|  | 300 | 8 | 0.5 | 5.0 |
|  | 125 | 13 | 0.5 | 25.1 |
|  | 175 | 30 | 0.5 | 13.2 |
|  | 100 | 8 | 2.5 | 28.1 |
|  | 125 | 13 | 2.5 | 21.7 |
|  | 175 | 30 | 2.5 | 11.8 |
|  | 150 | 8 | 10 | 16.0 |
|  | 175 | 13 | 10 | 13.5 |
|  | 200 | 30 | 10 | 8.8 |
|  | 250 | 8 | 30 | 7.5 |
|  | 300 | 13 | 30 | 6.7 |
|  | 300 | 30 | 30 | 5.1 |
| Comparative. Example 2-(a) | 50 | 8 | 0.5 | 1.3 |
|  | 500 | 8 | 0.5 | 2.1 |
|  | 1000 | 8 | 0.5 | 0.8 |
|  | 3000 | 8 | 0.5 | 0.2 |
| Comparative Example 2-(b) | 300 | 50 | 30 | 3.7 |
|  | 300 | 13 | 50 | 3.7 |
|  | 300 | 50 | 50 | 0.9 |
| Comparative Example 2-(c) | $^{60}$Co γ ray | | 20 | 0.01 |

Table 3

| Absorbed dose of Electron beam (kGy) | Graft ratio (% by mass) | Ion exchange capacity (meq/g) | Degree of swelling (% by mass) | Permeability of methanol ($10^{-7}$ $m^2$/hr) | Ion conductivity (S/cm) |
|---|---|---|---|---|---|
| 1 | 26 | 1.6 | 16 | 1.1 | 0.06 |
| 2 | 42 | 2.1 | 29 | 1.7 | 0.10 |
| 3 | 50 | 2.4 | 38 | 1.8 | 0.12 |
| 5 | 59 | 2.4 | 47 | 1.9 | 0.15 |

From the above evaluations, it can be seen that solid polyelectrolyte film having an excellent ion conductivity, a high dimensional stability, and also a low methanol permeability can be obtained by irradiating a dense fluorinated resin film having a thickness of 10 to 50 $\mu$m in an inert gas atmosphere with an electron beam having been accelerated at an accelerating voltage of 60 to 300 kV in vacuum and transmitted through an electron beam-transmitting window so that an absorbed dose of the resin film is from 1 to 50 kGy, followed by graft-polymerizing a polymerizable monomer.

**Claims**

1.    A process for producing a solid polyelectrolyte film by graft-polymerizing a polymerizable monomer onto a resin film which has been irradiated with a radiation, said process comprising irradiating a dense fluorinated resin film having a thickness of 10 to 50 $\mu$m in an inert gas atmosphere with an electron beam having been accelerated at an accelerating voltage of 60 to 300 kV in vacuum and transmitted through an electron beam-transmitting window so that an absorbed dose in the resin film is from 1 to 50 kGy, followed by graft-polymerizing the polymerizable monomer.

2.    The process for producing a solid polyelectrolyte film according to claim 1, wherein the electron beam-transmitting window is a Ti foil having a thickness of 5 to 30 $\mu$m and an irradiation distance is 30 cm or less.

3.    The process for producing a solid polyelectrolyte film according to claim 2, wherein the accelerating voltage is from 70 to 150 kV, the thickness of the electron beam-transmitting window is from 8 to 15 $\mu$m, and the irradiation distance is 3 cm or less.

4.    The process for producing a solid polyelectrolyte film according to any one of claims 1 to 3, wherein an absorbed dose rate of the resin film in said irradiation is 1 kGy/sec or more.

5.    The process for producing a solid polyelectrolyte film according to any one of claims 1 to 4, wherein an oxygen concentration in said irradiation atmosphere is 1,000 ppm or less.

6.    The process for producing a solid polyelectrolyte film according to any one of claims 1 to 5, wherein a temperature of said irradiation atmosphere is from 10 to 50°C.

7.    A solid polyelectrolyte film, which is obtainable by the process according to any one of claims 1 to 6.

8.    A fuel cell, which comprises the solid polyelectrolyte film according to claim 7 disposed between a fuel electrode and an air electrode.

9.    The fuel cell according to claim 8, which is of a direct methanol-type in which methanol is used as a fuel.

**EP 1 901 313 A1**

<div align="center">

**INTERNATIONAL SEARCH REPORT**

</div>

| | International application No. |
|---|---|
| | PCT/JP2006/311293 |

| A. CLASSIFICATION OF SUBJECT MATTER |
|---|
| $H01B13/00$(2006.01)i, $C08F251/00$(2006.01)i, $H01B1/06$(2006.01)i, $H01M8/02$ (2006.01)i, $H01M8/10$(2006.01)i |

According to International Patent Classification (IPC) or to both national classification and IPC

| B. FIELDS SEARCHED |
|---|
| Minimum documentation searched (classification system followed by classification symbols) |
| $H01B13/00$, $C08F251/00$, $H01B1/06$, $H01M8/02$, $H01M8/10$ |

Documentation searched other than minimum documentation to the extent that such documents are included in the fields searched

| Jitsuyo Shinan Koho | 1922-1996 | Jitsuyo Shinan Toroku Koho | 1996-2006 |
|---|---|---|---|
| Kokai Jitsuyo Shinan Koho | 1971-2006 | Toroku Jitsuyo Shinan Koho | 1994-2006 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X | JP 2005-135681 A (Shin-Etsu Chemical Co., Ltd.), 26 May, 2005 (26.05.05), Full text (Family: none) | 1-9 |
| A | JP 2004-87380 A (Hitachi Cable, Ltd.), 18 March, 2004 (18.03.04), (Family: none) | 1-9 |
| A | JP 2004-59752 A (Nitto Denko Corp.), 26 February, 2004 (26.02.04), (Family: none) | 1-9 |
| A | JP 2003-82129 A (Japan Atomic Energy Research Institute), 19 March, 2003 (19.03.03), (Family: none) | 1-9 |

☐ Further documents are listed in the continuation of Box C. ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 30 August, 2006 (30.08.06) | 05 September, 2006 (05.09.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7050170 A
- JP 8503574 A
- JP 9102322 A
- JP 2000011756 A
- JP 2000331693 A
- JP 2001216837 A
- JP 2001348439 A
- JP 2001522914 T
- JP 2002313364 A
- JP 2004059752 A